# EUROPÄISCHE PATENTSCHRIFT

(11) **EP 2 527 549 B1**
(45) Veröffentlichungstag und Bekanntmachung des Hinweises auf die Patenterteilung: **05.08.2015**
(21) Anmeldenummer: 12003749.4
(22) Anmeldetag: 11.05.2012
(51) Int. Cl.: E04B 1/41, F16M 9/00

(54) **Schwerlastanker und Verfahren zum Setzen von Schwerlastankern**
Heavy load anchor and method for setting heavy load anchors
Ancrage pour charges lourdes et procédé de mise en place d'ancrages pour charges lourdes

(30) Priorität: 23.05.2011 DE 102011102985
(43) Veröffentlichungstag der Anmeldung: 28.11.2012
(73) Patentinhaber: CFM Schiller GmbH, 52159 Roetgen (DE)
(72) Erfinder: Peters, Wolfgang, Dipl.-Ing., 4730 Raeren (BE)
(74) Vertreter: Cohausz Hannig Borkowski Wißgott

(56) Entgegenhaltungen:
- WO-A1-00/12833
- DE-U1- 7 631 850
- FR-A1- 2 310 525
- US-A- 3 390 862

## Beschreibung

Die Erfindung betrifft einen Schwerlastanker, umfassend ein Hüllrohr mit einer unteren und einer oberen Ankerplatte und mit einer darin aufgenommenen oder zumindest aufnehmbaren Ankerstange, die an der unteren Ankerplatte befestigt oder zumindest befestigbar ist oder die Ankerplatte durch eine Ausnehmung hindurch hintergreift, wobei unter der unteren Ankerplatte an dieser ein Passstück befestigt ist, an dessen unterem Ende eine vom Ende entfernbare und mit dem Ende in einer Passung verbindbare Bodenplatte angeordnet ist.

Die Erfindung betrifft weiterhin ein Verfahren zum Setzen von wenigstens einem Schwerlastanker solcher Art.

Schwerlastanker dieser gattungsgemäßen Art sind im Stand der Technik allgemein bekannt, z.B. aus WO 00/12833 A1. Sie werden beispielsweise verwendet, um schwere Maschinen oder sonstige Bauten / Bauteile auf Fundamenten, beispielsweise aus Beton ausgebildeten Fundamenten, oder Wänden zu befestigen. Hierfür werden die Schwerlastanker in die Vergussmasse, beispielsweise eines Fundamentes oder auch eines Wandbereichs eingegossen, so dass nach dem Erhärten der Vergussmasse an der oberen Ankerplatte mittels der Ankerstange beliebige Elemente befestigt werden können. Hierfür weist üblicherweise das obere, aus dem Hüllrohr herausragende Ende einer Ankerstange ein Gewinde zur Aufnahme einer Mutter auf, so dass jegliches, für eine Befestigung vorgesehene Bauteil mittels der Mutter an der oberen Ankerplatte befestigt werden kann.

Unter dem Merkmal, dass die Ankerstange an der unteren Ankerplatte befestigt oder befestigbar ist ist insbesondere auch zu verstehen, dass die Ankerplatte an der Ankerplatte lose, insbesondere beweglich festgelegt ist, insbesondere derart, dass die Ankerstange nicht in ihrer Längserstreckungsirchtung aus dem Hüllrohr herausgezogen werden kann. Dies kann z.B. dadurch erreicht werden, dass ein unterer Kopf der Ankerstange die untere Ankerplatte hintergreift, bzw. untergreift. Bei üblichen Schwerlastankern dieser Art ist es als Problem bekannt, dass bei einer nicht ausreichend präzisen Anordnung mehrerer Schwerlastanker zueinander sowie einer präzisen Höhenausrichtung der oberen Ankerplatten von mehreren Schwerlastankern zueinander die Befestigung eines jeglichen Bauteils, beispielsweise einer Maschine, an einem Fundament mittels der gesetzten Schwerlastanker erschwert wird. Eine ordnungsgemäße Befestigung eines jeglichen Bauteils an einem Fundament mittels eingegossener Schwerlastanker setzt demnach eine hochpräzise Justage der verschiedenen Schwerlastanker zueinander voraus.

Die Justage von Schwerlastankern zueinander über an der Verschalung vorab gesetzte Zentrierscheiben zeigt bereits die DE-GM 76 31 850. Die Zentrierscheiben werden jedoch nachtäglich mit der Verschalung entfernt und bilden keinen Teil des Schwerlastankers selbst.

Desweiteren weisen die Schwerlastanker des Standes der Technik das Problem auf, dass die Ankerstangen im Hüllrohr nicht lagestabil sind.

WO 00/12833 offenbart die Merkmale des Oberbegriffs des Anspruchs 1.

Es ist daher die Aufgabe der Erfindung, einen Schwerlastanker sowie ein Verfahren zum Setzen von mindestens einem Schwerlastanker zur Verfügung zu stellen, mittels denen eine Lagefestlegung der Ankerstangen erzielt wird und eine außerordentlich hohe Präzision beim Setzen von Schwerlastankern erzielt werden kann, sowohl in lateraler Richtung zwischen verschiedenen Schwerlastankern sowie bevorzugt auch bezüglich der Höhenlage der oberen Ankerplatten relativ zueinander.

Gemäß der Erfindung wird diese Aufgabe dadurch gelöst, dass der Schwerlastanker wenigstens ein separates Bauteil umfasst, welches durch das obere offene Ende des Hüllrohres hindurch in das Hüllrohr einführbar und zumindest bereichsweise um die Ankerstange herumlegbar ist, wobei mit dem wenigstens einen Bauteil die Ankerstange zentrisch zur Hüllrohrmittelachse im Hüllrohr festlegbar ist.

Die im Rahmen dieser Erfindungsbeschreibung genannten Richtungsangaben, insbesondere die Angaben "oben" und "unten" beziehen sich auf eine Montageposition eines Schwerlastankers in einem horizontal ausgerichteten Fundament für die stehende Montage eines jeglichen Bauteils. In dieser Montageposition ist demnach ein Hüllrohr bzw. dessen Mittenachse sowie die in einem Hüllrohr angeordnete Ankerstange vertikal orientiert.

Es ist jedoch ergänzend darauf hinzuweisen, dass die Möglichkeiten der Montage eines erfindungsgemäßen Schwerlastankers nicht auf die vorgenannte Position beschränkt ist. Diese Montageposition dient lediglich zur Referenzierung bezüglich der Richtungsangaben. Selbstverständlich ist es ebenso möglich, Schwerlastanker der erfindungsgemäßen Art auch in anderen Orientierungen, insbesondere an senkrecht stehenden Wandbereichen zu befestigen.

In einem Verfahren gemäß der Erfindung wird die Aufgabe weiterhin dadurch gelöst, dass unter Zuhilfenahme des vorgenannten erfindungsgemäßen Schwerlastankers das Setzen eines solchen Schwerlastankers nun derart erfolgen kann, dass die Bodenplatte von einem Passstück des zu setzenden Schwerlastankers entfernt wird und separat zum Rest des Schwerlastankers, d.h. ohne dass dieser Rest des Schwerlastankers an der Bodenplatte befestigt ist, an einer Verschalungsoberfläche befestigt wird und wenigstens ein separates Bauteil durch das obere offene Ende des Hüllrohres hindurch in das Hüllrohr eingeführt und zumindest bereichsweise um die Ankerstange herumgelegt wird, wobei mit dem wenigstens einen Bauteil die Ankerstange zentrisch zur Hüllrohrmittelachse im Hüllrohr festgelegt wird.

Ein solches Befestigen kann beispielsweise dadurch erfolgen, dass ein Verkleben der Bodenplatte an der Verschalungsoberfläche im Dünnbettmörtel vorgenommen wird. Ebenso sind andere Arten der Verklebung oder Befestigungen grundsätzlich denkbar. Erst nach der präzisen Befestigung der Bodenplatte wird sodann der Rest des Schwerlastankers mittels Passstück wiederum mit der Bodenplatte verbunden.

Gegenüber anderen bekannten Schwerlastankern hat der hier beschriebene erfindungsgemäße Schwerlastanker sowie das erfindungsgemäße Verfahren den besonderen Vorteil, dass lediglich die Bodenplatte eines erfindungsgemäßen Schwerlastankers vergleichsweise einfach mit einer hohen Genauigkeit positioniert werden muss.

Hierfür kann es beispielsweise vorgesehen sein, eine entsprechende Lehre zu benutzen, mittels welcher die Ausrichtung einer Bodenplatte an einer Verschalungsoberfläche vereinfacht wird. Dies ist besonders bevorzugt dann vorgesehen, wenn gleichzeitig mehrere Schwerlastanker der erfindungsgemäßen Art gesetzt werden sollen, so dass sodann mittels einer Lehre entsprechend die mehreren Bodenplatten mit hoher Präzision relativ zueinander ausgerichtet und an der Verschalungsoberfläche befestigt werden können.

Hierbei kann eine Verschalungsoberfläche durch jegliche Oberfläche gebildet werden, die eine fließfähige Vergussmasse in ihrer weiteren Ausbreitung begrenzt. Beispielsweise beim Gießen von Beton kann eine solche Verschalungsoberfläche durch Verschalungsbretter oder Verschalungselemente gegeben sein. Ebenso ist es denkbar, dass eine solche Verschalungsoberfläche durch eine bereits zuvor ausgehärtete Oberfläche einer Vergussmasse gebildet wird, auf welche ein weiteres Aufbringen von anderer oder auch dergleichen Vergussmasse vorgesehen ist.

Eine solche Verschalungsoberfläche, an der eine Bodenplatte befestigt werden soll, kann auch durch eine zuvor als sogenannte "Sauberkeitsschicht" ausgebildete Fläche realisiert sein, insbesondere bei der mit hoher Präzision eine Nivellierung und Einebnung der Verschalungsoberfläche erfolgt ist, z.B. durch eine besonders leicht fließfähige Vergussmasse.

Nach dem hochpräzisen Befestigen einer Bodenplatte oder mehreren Bodenplatten kann sodann jeweils der Rest eines erfindungsgemäßen Schwerlastankers wiederum an der Bodenplatte befestigt werden, wobei durch die Passung zwischen Bodenplatte und dem Passstück des Schwerlastankerrestes stets gewährleistet ist, dass die hohe Präzision beim Setzen der Bodenplatte somit zugleich auch eine hohe Präzision des erfindungsgemäßen Schwerlastankers insgesamt bewirkt.

In einer erfindungsgemäßen Ausführungsvariante kann es dabei vorgesehen sein, dass das eingangs genannte Passstück, welches unter der unteren Ankerplatte an dieser befestigt ist, z.B. als ein zylindrisches Element ausgebildet ist, welches zum Hüllrohr koaxial angeordnet ist, so dass die Mittenachse des zylindrischen Elementes mit der Mittenachse des Hüllrohrs übereinstimmend angeordnet ist.

Beispielsweise kann ein solches Passstück als volles zylindrisches Element ausgebildet sein, als teilweise hohles zylindrisches Element ausgebildet sein, insbesondere dessen zur Bodenplatte weisendes Ende rohrförmig ist oder auch als vollständig hohl ausgebildetes zylindrisches Element, somit als Rohrstück insgesamt ausgebildet sein.

In sämtlichen dieser Ausgestaltungsvarianten kann die Passung gebildet sein durch einen an der Bodenplatte angeordneten Vorsprung, der das vorgenannte zylindrische Element, d.h. das Passstück, entweder umgreift oder in dieses eingreift.

Ein Eingreifen kann insbesondere dann vorgesehen sein, wenn zumindest das untere, zur Bodenplatte weisende Ende des Passstückes hohlzylindrisch ausgebildet ist, so dass ein Vorsprung an der Bodenplatte, der zu diesem Ende des Passstückes weist, z.B. einen Außendurchmesser aufweisen kann, der innerhalb der gewählten Passungstoleranz mit dem Innendurchmesser des rohrförmigen Endes des Passstücks übereinstimmt.

In anderer Ausführung kann auch ein ringförmiger Vorsprung an der Bodenplatte vorgesehen sein, der einen Innenquerschnitt, insbesondere einen kreisförmigen freien Innenquerschnitt aufweist, der innerhalb der gewählten Passungstoleranz mit dem Außendurchmesser des Passstückendes übereinstimmend ist.

Statt eines in Richtung des Passstückes von der Bodenplatte vorspringenden Vorsprungs kann es ebenso vorgesehen sein, dass bei genügend großer Dicke der Bodenplatte diese eine sich von der Bodenplattenoberfläche nach unten erstreckende Ausnehmung aufweist, deren Querschnitt, insbesondere innerer freier kreisförmiger Querschnitt, innerhalb der gewählten Passungstoleranz übereinstimmend ist mit dem Außenquerschnitt, insbesondere dem Außendurchmesser des Passstücks, an dessen zur Bodenplatte weisenden Ende.

In allen diesen vorgenannten Ausführungsformen können demnach Bodenplatte und Passstück durch einen relativen Eingriff ineinander aneinander innerhalb der Passungstoleranz befestigt werden.

In einer Ausführungsvariante kann es hierbei weiterhin vorgesehen sein, dass die Bodenplatte bzw. der daran angeordnete Vorsprung oder die Ausnehmung eine Zentrierhilfe aufweist, die mit der eingangs genannten Lehre in Eingriff geraten kann, so dass mittels einer solchen Zentrierhilfe und einer Lehre mehrere Bodenplatten von erfindungsgemäßen Schwerlastankern relativ zueinander mit hoher Präzision gesetzt werden können. Bevorzugt kann eine solche Zentrierhilfe auf der Hüllrohrmittenachse angeordnet sein.

Mit Bezug auf eine später zu beschreibende Ausführungsform einer beweglichen oberen Ankerplatte kann es bevorzugt lediglich nötig sein, die laterale präzise Ausrichtung der Bodenplatten in der Ebene der Verschalungsoberfläche zueinander zu erzielen, wohingegen eine Ausrichtung der verschiedenen Bodenplatten in der Höhe relativ zueinander nicht unbedingt erforderlich ist.

In einer weiterhin kombinierbaren Ausführungsform kann es vorgesehen sein, dass an der unteren Ankerplatte und/oder an dem Hüllrohr wenigstens eine Lasche befestigt ist. Bevorzugt sind mehrere solcher Laschen vorgesehen, die in gleichmäßiger Winkelteilung eine untere Ankerplatte und/oder das Hüllrohr umgeben.

Solche Laschen können dazu dienen, Hilfsverbinder zwischen benachbarten Schwerlastankern anzuordnen, die mit ihren jeweiligen Enden an je einem Schwerlastanker bzw. einer Lasche eines solchen Schwerlastankers befestigt sind. So wird die relative Lage der Schwerlastanker insbesondere beim Prozess des Vergießens mit einer Vergussmasse zueinander gesichert.

In einer wiederum weiterhin kombinierbaren Ausführungsform kann es vorgesehen sein, dass in einem Bereich zwischen der Bodenplatte und der unteren Ankerplatte in einem zumindest bereichsweise als Rohr ausgebildeten Passstück ein die Einstecktiefe der Ankerstange begrenzendes Anschlagelement angeordnet ist.

Ein solches Anschlagelement kann beispielsweise als eine Platte oder Fläche ausgebildet sein, die unterhalb einer Öffnung positioniert ist, die in der unteren Ankerplatte vorgesehen ist, um eine Ankerstange mit seinem unteren Kopfende, insbesondere einem hammerkopfförmigen Kopfende, hindurchzustecken.

Es kann sich beispielsweise um eine schlitzförmige Ausnehmung handeln, die bei entsprechender Orientierung des Hammerkopfendes der Ankerstange das Hindurchstecken dieses Kopfendes durch die untere Ankerplatte gestattet, wohingegen ein Zurückziehen der Ankerstange nach einer 90 Grad Drehung verhindert ist. Hierfür kann die Ankerplatte an ihrer unteren Oberfläche in einer Orientierung senkrecht zur hindurchgehenden Öffnung eine dem Hammerkopfprofil entsprechende Vertiefung aufweisen, in die der Hammerkopf bei axialer Zugbelastung eingreift und die sodann eine Rückdrehung verhindert.

Durch das Anschlagelement wird wirkungsvoll verhindert, dass beim Einführen einer Ankerstange in das Hüllrohr aufgrund der Beabstandung zwischen Bodenplatte und unterer Ankerplatte die Ankerstange zu tief in das Hüllrohr hineinfällt, hierdurch beispielsweise unerreichbar wird, da eine Ankerstange üblicherweise bei einer erfindungsgemäßen Ausgestaltung des Schwerlastankers eine axiale Länge aufweist, die kürzer ist als die innere axiale Länge, die insgesamt durch das Hüllrohr und das Passstück gegeben ist.

Es kann hierbei weiterhin vorgesehen sein, dass das Anschlagelement auf seiner zur unteren Ankerplatte weisenden Seite einen Vorsprung aufweist, der zentriert auf der Mittenachse des Hüllrohrs liegt und der mit einer dazu passenden Ausnehmung am unteren stirnseitigen Ende der Ankerstange übereinstimmt, die zentriert zur Mittenachse der Ankerstange orientiert ist, so dass eine in den erfindungsgemäßen Schwerlastanker eingesteckte Ankerstange sich beim Anschlagen an dem Anschlagelement im Einsteckvorgang automatisch mittig auf die Hüllrohrmittenachse positioniert.

In einer weiterhin bevorzugten Weiterbildung, die alleinig oder auch in Verbindung mit dem zuvor beschriebenen Ausführungen realisiert sein kann, kann es vorgesehen sein, dass oberhalb der unteren Ankerplatte in dem Hüllrohr zwei einander gegenüberliegende Leitbleche angeordnet sind, deren Abstand zueinander sich in Richtung zur unteren Ankerplatte verringert, insbesondere bis auf ein Maß verringert, dass zumindest im Wesentlichen der Breite einer Durchgangsöffnung in der Ankerplatte entspricht, durch welche das untere, insbesondere hammerkopfförmige Ende der Ankerstange hindurchführbar ist.

So hat eine solche Ausführung den Vorteil, dass unabhängig von einer exakten Positionierung beim Einführen einer Ankerstange in das Hüllrohr das untere Kopfende, insbesondere ein hammerkopfartiges Kopfende der Ankerstange, automatisch durch die Leitbleche in die Richtung zur Öffnung innerhalb der unteren Ankerplatte geführt wird und dabei gleichzeitig auch bewirkt wird, dass die Ankerstange durch die Wirkung zwischen Leitblech und unterem Kopfende so gedreht wird, dass das Kopfende durch die Ausnehmung der Ankerplatte hindurchführbar ist.

Erst wenn die Ankerstange mit ihrem Kopfende durch die Ankerplatte hindurchgeführt ist, kann diese um 90 Grad verdreht werden, um ein Rückziehen zu verhindern. Dabei kann es weiterhin vorgesehen sein, dass das obere Ende einer Ankerstange, insbesondere welches ein Gewinde zur Befestigung einer Mutter trägt, eine stirnseitige Schlitzung aufweist, die die Orientierung des hammerkopfartigen unteren Kopfendes der Ankerstange anzeigt.

Erfindungsgemäß ist es vorgesehen, dass ein Schwerlastanker der erfindungsgemäßen Art zusätzlich wenigstens ein weiteres separates Bauteil umfasst, welches durch das obere offene Ende des Hüllrohrs hindurch in das Hüllrohr einführbar ist und zumindest bereichsweise um die Ankerstange herumlegbar ist, so dass mit dem wenigstens einen Bauteil die Ankerstange zentrisch zur Hüllrohrmittenachse im Hüllrohr insbesondere an dessen oberen Bereich festlegbar ist.

So wird demnach beispielsweise das untere kopfförmige Ende einer Ankerstange zentrisch, d.h. koaxial zur Hüllrohrmittenachse positioniert, beispielsweise einerseits durch die zuvor beschriebene Ausnehmung in senkrechter Orientierung in der unteren Ankerplattenoberfläche und/oder durch den zentrischen Vorsprung am Anschlagelement, wohingegen der obere Bereich der Ankerstange durch dieses vorgenannte separate Bauteil auf die Hüllrohrmittenachse positioniert werden kann.

Ein solches Bauteil kann in einer möglichen Ausführungsform z.B. ausgebildet sein als eine Rohrhülse, insbesondere die eine Längserstreckung aufweist, welche länger ist als der Außendurchmesser der Rohrhülse, wobei diese Rohrhülse in ihrem Außendurchmesser dem Innendurchmesser des Hüllrohrs entspricht und diese Rohrhülse weiterhin eine Ausnehmung aufweist, die in ihrer Form einer mittigen Bohrung im Durchmesser der Ankerstange entspricht, welche einseitig in Richtung zur Mantelfläche offen ist.

Eine solche Ausnehmung kann auch als Längsschlitzung bezeichnet werden, deren Bodengrund eine Rinne parallel zur Längserstreckung bildet, wobei die Rinne senkrecht zur Längserstreckung halbkreisförmigen Querschnitt hat und der Mittelpunkt des Halbkreisquerschnittes auf der Mittenachse des Hüllrohrs liegt.

Ein solches Bauelement kann beispielsweise vorgesehen sein, wenn ein erfindungsgemäßer Schwerlastanker in seiner Längserstreckung vertikal montiert werden soll. Das Bauelement der zuvor beschriebenen Art kann hierbei nach dem Einsetzen der Ankerstange in das vertikal montierte Hüllrohr aufgrund der Längsschlitzung um die Ankerstange herumgeführt und in das Hüllrohr eingelegt werden, so dass die Rinne des Bauelementes mit ihrem Boden in Schwerkraftrichtung unterhalb der Ankerstange liegt und die axiale Schlitzung oben liegt. Die Ankerstange wird dadurch entgegen der wirkenden Schwerkraft exakt auf der Mittenachse des Hüllrohrs gehalten.

In einer anderen Ausführung kann es auch vorgesehen sein, ein solches, die Ankerstange zentrierendes Bauelement als ein flächiges Element auszubilden, beispielsweise scheibenförmig, mit einem Außendurchmesser, der dem Innendurchmesser des Hüllrohrs entspricht und mit einer inneren zentrischen Ausnehmung im Durchmesser der Ankerstangen, insbesondere wobei dieses Bauelement in einer die Mittenachse umfassenden Schnittebene zweitgeteilt sein kann.

Bei einer Zweiteilung besteht so die Möglichkeit, die beiden Hälften des beschriebenen Bauelementes von zwei Seiten um die Ankerstange herumzulegen und somit eine geschlossene, die Ankerstange umgebende Scheibe auszubilden, die sodann durch axiales Verschieben auf der Ankerstange in das Hüllrohr eingeschoben wird und hierdurch die Ankerstange insbesondere nahe des oberen Hüllrohrendes auf die Hüllrohrmittenachse zentriert.

Gemäß einer weiteren Ausführung der Erfindung kann die eingangs beschriebene Aufgabe, eine hochpräzise Positionierung zu erzielen, in Kombination mit den zuvor beschriebenen Ausführungsformen realisiert sein, bei dem/denen die obere Ankerplatte zumindest bereichsweise am oberen Ende des Hüllrohrs, insbesondere in einer zwischen Hüllrohr und Ankerplatte ausgebildeten Passung axial verschieblich ist. Diese Passung kann realisiert sein, durch eine inneren Bohrung in der oberen Ankerplatte und der äußeren Mantelfläche des Hüllrohres an dessen oberen Endbereich, deren jeweilige Durchmesser innerhalb der gewählten Passungstoleranz gleich sind.

Wie bereits eingangs erwähnt wurde, kann es gegebenenfalls nicht immer in ausreichendem Maße gewährleistet sein, dass beim Setzen von Schwerlastankern der gattungsgemäßen Art oder der zuvor beschriebenen erfindungsgemäßen Art die Höhenlagen der oberen Ankerplatten übereinstimmend ist.

In Verbindung mit einer zuvor beschriebenen erfindungsgemäßen Ausführungsform könnten sich bei fest positionierten Ankerplatten durch Befestigung von Bodenplatten im Dünnbettmörtel aufgrund verschiedener Mörtelschichtstärken auch unterschiedliche Höhenlagen der oberen Ankerplatten ergeben.

Um dies bei den erfindungsgemäßen zuvor beschriebenen Ausführungsformen zu vermeiden, ist es hier erfindungsgemäß vorgesehen, dass die obere Ankerplatte mit dem Hüllrohr keine starre ortsfeste Verbindung aufweist, sondern axial auf dem oberen Hüllrohrende zumindest bereichsweise verschieblich ist, wobei diese axiale Verschieblichkeit mit einer sehr hohen Präzision durch eine Passung zwischen Ankerplatte und Hüllrohr realisiert ist.

Es besteht so die Möglichkeit, nach einem Setzen eines Schwerlastankers und Eingießen des Hüllrohrs in einer Vergussmasse nachträglich die axiale Position der oberen Ankerplatte variabel einzustellen.

Beim Setzen eines solchen erfindungsgemäßen Schwerlastankers kann es vorgesehen sein, dass um das obere Ende des Hüllrohrs, an welchem eine axial verschiebliche obere Ankerplatte befestigbar ist, für den Vorgang des Vergießens mit einer Vergussmasse zunächst eine Verschalung angeordnet wird, mittels der beim Umgießen des Hüllrohrs eine Aussparung um das obere Ende des Hüllrohrs herum in der verfestigten Vergussmasse erzeugt wird, innerhalb der sodann nach einem Entfernen der Verschalung nach Aushärten der Vergussmasse die obere Ankerplatte durch axiales Verschieben auf dem Hüllrohr justiert werden kann bzw. wie gewünscht justiert wird, um eine gewünschte Höhenlage, insbesondere in Übereinstimmung mit Ankerplatten benachbarter Schwerlastanker zu erreichen. Nach erfolgter Justage kann sodann die obere Ankerplatte nachträglich in der Aussparung umgossen werden, entweder mit einer anderen oder derselben zuvor benutzten Vergussmasse, beispielsweise Beton, Estrich etc.

Um die Justage der oberen Ankerplatte zu vereinfachen, kann es vorgesehen sein, dass diese obere Ankerplatte wenigstens eine Justageschraube umfasst, bevorzugt drei Justageschrauben in gleichmäßiger Winkelteilung umfasst, wobei eine solche Justageschraube parallel zur Mittenachse des Hüllrohrs orientiert ist.

Eine entsprechende Justageschraube kann demnach in der vorbeschriebenen Richtung bevorzugt durch eine obere Ankerplatte hindurchgeschraubt werden, so dass das untere Ende der Justageschraube aufliegt auf der das obere Hüllrohrende umgebenden unteren Fläche der durch die Verschalung erzeugten Ausnehmung.

Durch Verstellen an den Justageschrauben kann dann zumindest die axiale Lage der oberen Ankerplatte auf dem oberen Hüllrohrende eingestellt werden und fixiert werden. Gegebenenfalls kann es bei einer entsprechend vorgesehenen größeren Toleranz in der Passung zwischen Hüllrohr und Ankerplatte vorgesehen sein, auch die Neigung der oberen Ankerplatte relativ zur Hüllrohrmittenachse einzujustieren. So kann auch die Lage der Ebene der Ankerplattenoberfläche in gewünschter Weise eingestellt werden.

Bevorzugt ist es jedoch vorgesehen, die Passung zwischen Ankerplatte und oberem Ende des Hüllrohrs derart präzise mit einer geringen Toleranz auszufertigen, dass zwar eine axiale Verschiebung möglich ist, bei dieser Verschiebung die obere Oberfläche der oberen Ankerplatte jedoch in einer Ebene immer senkrecht zur Mittenachse des Hüllrohrs orientiert bleibt.

Ausführungsbeispiele der Erfindung sind in den nachfolgenden Figuren dargestellt. Es zeigen:
- Figur 1: einen erfindungsgemäßen Schwerlastanker bei senkrechter Montage in einem horizontalen Fundament
- Figur 2: einen erfindungsgemäßen Schwerlastanker bei waagerechter Montage, beispielsweise innerhalb einer senkrecht stehenden Wand

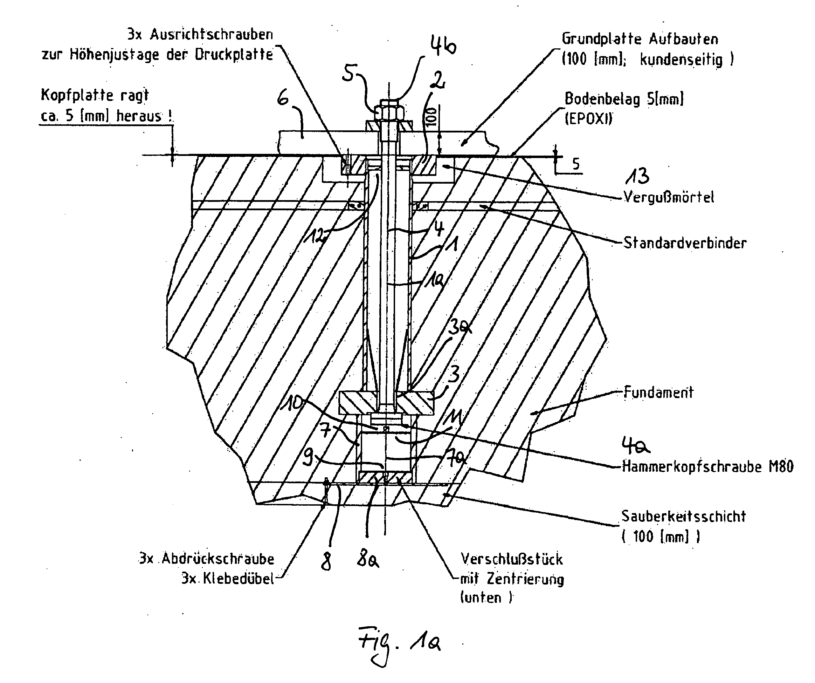

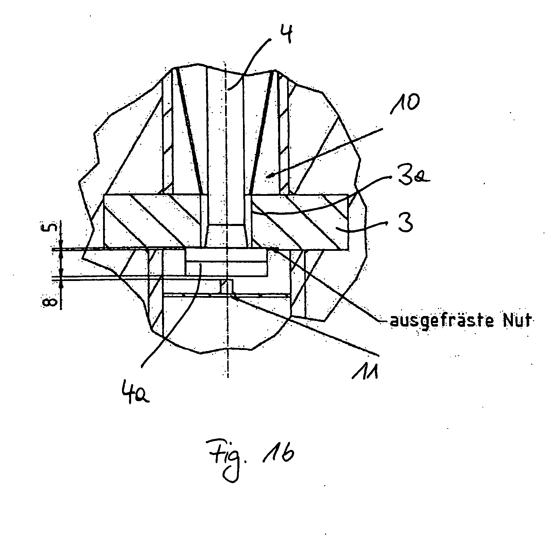

Die Figur 1 zeigt einen bereits durch Vergussmasse umgossenen erfindungsgemäßen Schwerlastanker, der zunächst gemäß üblicher gattungsgemäßer Ausgestaltung ein Hüllrohr 1 aufweist, welches eine obere Ankerplatte 2 aufweist sowie eine untere Ankerplatte 3.

Die untere Ankerplatte 3 hat weiterhin eine Ausnehmung 3a, die einen Innenquerschnitt aufweist, welcher im Wesentlichen dem Außenquerschnitt des Kopfes 4a einer Ankerstange 4 entspricht, der beispielsweise hammerkopfartig ausgebildet sein kann. So kann der Hammerkopf durch die Ausnehmung 3a in der Ankerplatte hindurchgesteckt werden, wohingegen die Ankerstange nach Rotation um 90 Grad nicht mehr zurückgezogen werden kann, so dass die Ankerstange mit einem am oberen Ende angeordneten Gewinde 4b, welches eine Mutter 5 tragen kann, ein jegliches Bauteil 6 zwischen Mutter und oberer Ankerplatte 2 klemmend befestigen kann. Die zwischen Mutter und oberer Ankerplatte wirkende Klemmkraft wird hierbei durch die Verbindung zwischen Ankerstange und unterer Ankerplatte in das Fundament eingeleitet.

Die erfindungsgemäße Ausgestaltung des Schwerlastankers unterscheidet sich von den gattungsgemäßen Schwerlastankern nun dadurch, dass unterhalb der unteren Ankerplatte 3 an dieser bei der hier beschriebenen Ausführungsform ein rohrförmiges Passstück 7 befestigt ist, das koaxial zum Hüllrohr 1 positioniert ist. Daher stimmt die Mittenachse 7a des Passstücks mit der Mittenachse 1 a des Hüllrohrs überein.

Am unteren Ende des Passstücks 7, welches hier rohrförmig ausgebildet ist, ist an diesem Ende eine Bodenplatte 8 lösbar befestigt, die einen Außenquerschnitt aufweist, welcher größer ist als der Außenquerschnitt des Passstücks 7, beispielsweise doppelt so großen Durchmesser aufweist wie das Passstück.

Die Passung zwischen Bodenplatte und Passstück 7 ist hier derart realisiert, dass auf der Bodenplatte 8 nach oben in Richtung zum Passstück vorspringend ein Vorsprung 8a angeordnet ist, dessen Außendurchmesser innerhalb der Passungstoleranz korrespondierend ausgebildet ist zum Innendurchmesser des unteren offenen Endes des Passstückes 7.

So kann die Bodenplatte mit dem Vorsprung 8a in das rohrförmige Passstück 7 eingesteckt werden bzw. zum Zwecke der Montage bzw. des Setzens eines Schwerlastdübels dieser erfindungsgemäßen Art von dem Passstück abgezogen werden. Es besteht sodann die Möglichkeit, nach dem erfindungsgemäßen Verfahren lediglich die Bodenplatte alleine auf einem Schalungsuntergrund zu befestigen, beispielsweise durch Verkleben im Dünnbettmörtel.

Um dieses Befestigen zu erleichtern, kann es vorgesehen sein, dass der Vorsprung 8a der Bodenplatte 8 eine zentrische Zentrierhilfe 9 aufweist, die mit einer Lehre zusammenwirken kann, um das exakte Positionieren der Bodenplatte zu erleichtern, insbesondere dann, wenn mehrere Bodenplatten gleichzeitig relativ zueinander exakt ausgerichtet werden sollen.

Nach dem Befestigen der Bodenplatte 8 auf einem Verschalungsuntergrund bzw. einer jeglichen Oberfläche kann sodann der Rest des Schwerlastankers wiederum an dem Vorsprung 8a mit hoher Genauigkeit innerhalb der Passungstoleranz befestigt werden, so dass automatisch durch die hohe Präzision beim Setzen der Bodenplatten auch eine hohe Präzision bei der Ausrichtung des Hüllrohrs 1 bzw. des gesamten Schwerlastankers der erfindungsgemäßen Art erzielt ist.

Die Ausführungsform zeigt hier weiterhin noch, dass zum Zwecke der Erleichterung des Einführens einer Ankerstange 4 in das Hüllrohr oberhalb der unteren Ankerplatte 3 zwei Leitbleche 10 angeordnet sind, deren Abstand zueinander von oben nach unten in Richtung zur unteren Ankerplatte abnimmt bis auf ein Maß, welches im Wesentlichen der Querschnittsöffnung 3a entspricht. Hierdurch wird automatisch das untere Kopfende, welches bevorzugt hammerkopfartig ausgebildet ist, auf die Öffnung 3a in der unteren Ankerplatte 3 zugeführt und kann durch die Ankerplatte hindurchgesteckt werden.

Um hier zu vermeiden, dass die Ankerstange zu tief in das Hüllrohr eindringt, ist es bei der hier gezeigten Ausführungsform vorgesehen, ein Anschlagelement 11 in der Art einer Platte oder Scheibe vorzusehen, deren Orientierung senkrecht zur Mittenachse 7a bzw. 1 a ist und in einem Abstand unterhalb der Ankerplatte 3 befestigt ist, so dass hierdurch die Durchsteckweite für die Ankerstange 1 begrenzt ist. Hierbei kann das Anschlagelement 11 zentrisch auf der Mittenachse 7a einen Vorsprung 11 a aufweisen, der mit einer Ausnehmung am unteren stirnseitigen Ende des Kopfes der Ankerstange 1 zusammenwirken, um dieses Kopfende auf die Mittenachse 7a bzw. 1 a zu zentrieren.

Weiterhin ist es bei der Ausführung gemäß der Figur 1 vorgesehen, so wie es im allgemeinen Teil beschrieben wurde, auch eine obere Zentrierhilfe in der Art eines zusätzlichen Bauteils 12 vorzusehen, welches das obere Ende der Ankerstange umgibt und so die Ankerstange mit ihrer Achse auf die Mittenachse 1 a des Hüllrohrs zentriert.

Um das Montieren dieses Bauteils 12 zu erleichtern, kann dieses zweitgeteilt sein in zwei Hälften, die von beiden Seiten um die Ankerstange herumgelegt werden können. Es besteht auch die Möglichkeit, das Bauteil 12 als einfache Scheibe mit einer mittigen Ausnehmung auszugestalten, welches über das obere Ende der Ankerstange herübergeführt wird und sodann in das obere offene Ende des Hüllrohrs 1 eingeführt wird.

Um allgemein dass Einführung des Baiteils 12 zu erleichtern und eine Zentrierung zu bewirken, kann es vorgesehen sein, dass die innere Mantelfläche des oberen Endes des Hüllrohrs einen konischen Anlaufbereich aufweist.

In weiterer bevorzugter Ausführungsform ist es hier vorgesehen, dass die obere Ankerplatte 2 im oberen Bereich des Hüllrohrs 1 axial zu diesem zumindest bereichsweise verschieblich ist. Um dies mit einer hohen Präzision zu erzielen, ist eine Passung zwischen oberer Ankerplatte, d.h. deren innerer durchgehender Ausnehmung und der äußeren Manteloberfläche des Hüllrohrs 1 realisiert.

Für das erfindungsgemäße Verfahren zum Setzen eines solchen Schwerlastankers ist es demnach vorgesehen, in dem Bereich 13, wie er vorliegend ohne Schraffur ausgeführt ist, vor dem Vergießen mit einer Vergussmasse eine Verschalung anzuordnen, so dass das Einfließen der Vergussmasse in diesen Bereich beim Vergießen verhindert wird.

Nach dem Aushärten der Vergussmasse ergibt sich demnach ein freier Ausnehmungsbereich, welcher der ursprünglich eingesetzten Verschalung entspricht, in welchem weiterhin die axiale Verschieblichkeit der oberen Ankerplatte 2 nach dem Aufsetzen auf das Hüllrohr gegeben ist. Beispielsweise mittels Ausrichtungs- bzw. Justageschrauben kann die Ankerplatte 2 in ihrer Höhe bzw. axialen Lage relativ zum Hüllrohr 1 positioniert werden, wobei nach Erzielen der gewünschten Justageposition die der zuvor gesetzten Verschalung entsprechende Ausnehmung 3 mit einer weiteren oder dergleichen zuvor benutzten Vergussmasse ausgegossen wird, so dass die Position der Ankerplatte dauerhaft fixiert ist. Die Justage kann hier z.B. so erfolgen, dass die obere Oberfläche der oberen Ankerplatte über dem Höhenniveau der umgebenden ausgehärteten Vergussmasse liegt, z.B. 5 mm darüber.

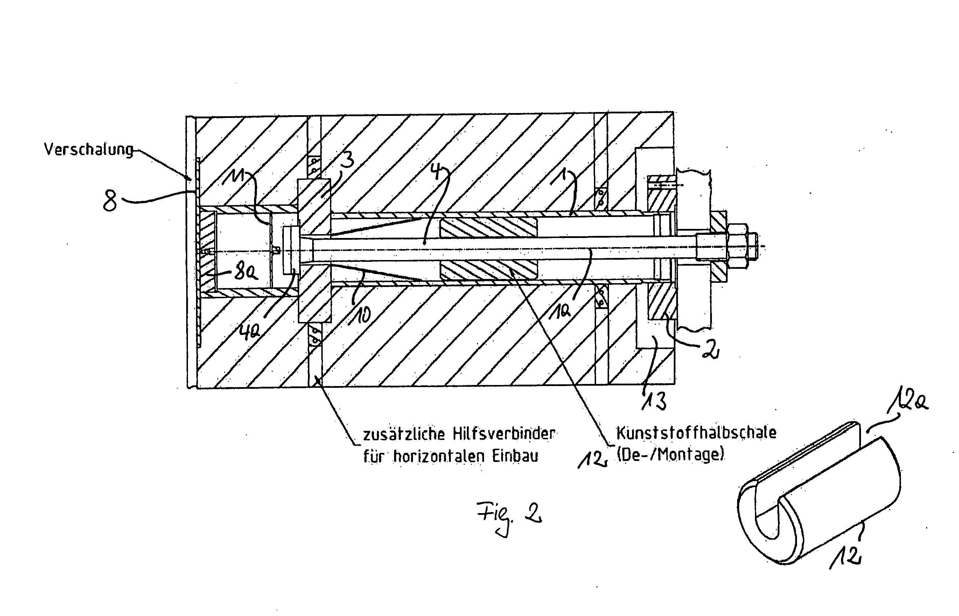

Die Figur 2 zeigt gegenüber der Figur 1 eine Ausführungsform, die lediglich dadurch geändert ist, dass die Montageposition des erfindungsgemäßen Schwerlastankers waagerecht ist, d.h. die Mittenachse 1a des Hüllrohrs 1 liegt hier waagerecht, was einer Montage eines Schwerlastankers beispielsweise in einer betonierten Wand entsprechend kann.

Hier ist die axiale Lage der Ankerstange 4 dadurch gewährleistet, dass durch das hier rechtsseitige, offene Ende des Hüllrohrs 1 ein separates Bauteil 12 eingesetzt ist, welches im Wesentlichen einem Vollzylinder entspricht, der eine Schlitzung entlang seiner Längserstreckung aufweist, wobei diese Schlitzung eine Rinne bildet mit einem halbkreisförmigen Rinnengrund, dessen Kreismittelpunkt mit der gewünschten Lage der Ankerstange, hier insbesondere übereinstimmend mit der Mittenachse 1 a des Hüllrohrs 1, übereinstimmt. Dieses Bauteil 12 kann somit nach Einsetzen oder mit Einsetzen der Ankerstange in das Hüllrohr 1 in das Hüllrohr 1 eingeschoben werden, um die axiale Lage zu sichern.

In den sonstigen Ausführungsdetails entspricht die Ausführungsform der Figur 2 vollständig derjenigen der Figur 1.

Ersichtlich ist es bei sämtlichen Ausführungsformen so, dass eine hohe Positionsgenauigkeit des erfindungsgemäßen Schwerlastankers durch das separate positionsgenaue Setzen der Bodenplatte 8 erzielt wird sowie durch die kombinierte oder separat auch bei gattungsgemäßen Schwerlastankern realisierte Verschieblichkeit der oberen Ankerplatte in axialer Richtung.

## Patentansprüche

1. Schwerlastanker umfassend ein Hüllrohr (1) mit einer unteren (3) und einer oberen Ankerplatte (2) und mit einer darin aufgenommenen oder zumindest aufnehmbaren Ankerstange (4), die an der unteren Ankerplatte (3) befestigt oder zumindest befestigbar ist oder die untere Ankerplatte (3) durch eine Ausnehmung (3a) hindurch hintergreift, wobei unter der unteren Ankerplatte (3) an dieser ein Passstück (7) befestigt ist, an dessem unteren Ende eine vom Ende entfernbare und mit dem Ende in einer Passung verbindbare Bodenplatte (8) angeordnet ist, **dadurch gekennzeichnet, dass** er wenigstens ein separates Bauteil (12) umfasst, welches durch das obere offene Ende des Hüllrohres (1) hindurch in das Hüllrohr (1) einführbar und zumindest bereichsweise um die Ankerstange (4) herumlegbar ist, wobei mit dem wenigstens einen Bauteil (12) die Ankerstange (4) zentrisch zur Hüllrohrmittelachse (1 a) im Hüllrohr (1) festlegbar ist.

2. Schwerlastanker nach Anspruch 1, **dadurch gekennzeichnet, dass** das Bauteil (12) ausgebildet ist als
a. Rohrhülse mit einem Aussendurchmesser, der dem Innendurchmesser des Hüllrohrs (1) entspricht und mit einer Ausnehmung (12a), die in ihrer Form einer mittigen Bohrung im Durchmesser der Ankerstange (4) entspricht, die einseitig in Richtung zur Mantelfläche offen ist oder
b. Vollzylinder, der eine Schlitzung entlang seiner Längserstreckung aufweist, wobei diese Schlitzung eine Rinne bildet mit einem halbkreisförmigen Rinnengrund, dessen Kreismittelpunkt mit der gewünschten Lage der Ankerstange, insbesondere der Mittenachse der Hüllrohres (1) übereinstimmt oder
c. hülsenförmiges oder flächiges Element mit einem Aussendurchmesser, der dem Innendurchmesser des Hüllrohrs (1) entspricht und mit einer inneren zentrischen Ausnehmung im Durchmesser der Ankerstange (4) oder
d. hülsenförmiges oder flächiges Element mit einem Aussendurchmesser, der dem Innendurchmesser des Hüllrohrs (1) entspricht und mit einer inneren zentrischen Ausnehmung im Durchmesser der Ankerstange (4), welches in einer die Mittenachse umfassenden Schnittebene zweigeteilt ist.

3. Schwerlastanker nach einem der vorherigen Ansprüche, **dadurch gekennzeichnet, dass** die innere Mantelfläche des oberen Endes des Hüllrohres (1) einen konischen Anlaufbereich aufweist.

4. Schwerlastanker nach einem der vorherigen Ansprüche, **dadurch gekennzeichnet, dass** das Passstück (7) als ein zum Hüllrohr (1) koaxiales zylindrisches Element, insbesondere als Rohr (7) ausgebildet ist und die Passung zwischen einem an der Bodenplatte (8) angeordneten Vorsprung (8a), der das zylindrische Element (7) umgreift oder in dieses eingreift, gebildet ist.

5. Schwerlastanker nach einem der vorherigen Ansprüche, **dadurch gekennzeichnet, dass** an der unteren Ankerplatte (3) und/oder an dem Hüllrohr (1) wenigstens eine Lasche befestigt ist, insbesondere zur Befestigung von Hilfsverbindern, mit denen mehrere Schwerlastanker untereinander verbindbar sind.

6. Schwerlastanker nach einem der vorherigen Ansprüche, **dadurch gekennzeichnet, dass** in einem Bereich zwischen der Bodenplatte (8) und der unteren Ankerplatte (3) in einem zumindest teilweise als Rohr ausgebildeten Passstück (7) ein die Einstecktiefe der Ankerstange (4) begrenzendes Anschlagelement (11) angeordnet ist, insbesondere, welches als Platte (11) ausgebildet ist, mit einem zur unteren Ankerplatte (3) weisenden, insbesondere mittigen Vorsprung (11a).

7. Schwerlastanker nach einem der vorherigen Ansprüche, **dadurch gekennzeichnet, dass** oberhalb der unteren Ankerplatte (3) in dem Hüllrohr (1) zwei einander gegenüberliegende Leitbleche (10) angeordnet sind, deren Abstand zueinander sich in Richtung zur unteren Ankerplatte (3) verringert, insbesondere bis auf ein Maß verringert, das zumindest im Wesentlichen der Breite einer Ausnehmung (3a) in der Ankerplatte (3) entspricht, durch welche das untere, insbesondere hammerkopfförmige Ende (4a) der Ankerstange (4) hindurchführbar ist.

8. Schwerlastanker nach einem der vorherigen Ansprüche, **dadurch gekennzeichnet, dass** die obere Ankerplatte (2) zumindest bereichsweise am oberen Ende des Hüllrohres (1), insbesondere in einer zwischen Hüllrohr (1) und Ankerplatte (2) ausgebildeten Passung axial verschieblich ist.

9. Schwerlastanker nach Anspruch 8, **dadurch gekennzeichnet, dass** die obere Ankerplatte (2) wenigstens eine Justageschraube, insbesondere drei Justageschrauben in gleichmäßiger Winkelteilung zur Justierung der axialen Position aufweist, wobei die wenigstens eine Justageschraube parallel zur Mittenachse (1 a) des Hüllrohres (1) orientiert ist.

10. Verfahren zum Setzen von wenigstens einem Schwerlastanker nach einem der vorherigen Ansprüche, **dadurch gekennzeichnet, dass** die Bodenplatte (8) von einem Passstück (7) des zu setzenden Schwerlastankers entfernt und separat zum Rest des Schwerlastankers an einer Verschalungsoberfläche befestigt wird, insbesondere durch Verkleben im Dünnbettmörtel und nach Befestigung der Bodenplatte (8) der Rest des Schwerlastankers mittels Passstück (7) mit der Bodenplatte (8) verbunden wird und wenigstens ein separates Bauteil (12) durch das obere offene Ende des Hüllrohres (1) hindurch in das Hüllrohr (1) eingeführt und zumindest bereichsweise um die Ankerstange (4) herumgelegt wird, wobei mit dem wenigstens einen Bauteil (12) die Ankerstange (4) zentrisch zur Hüllrohrmittelachse (1 a) im Hüllrohr (1) festgelegt wird.

11. Verfahren nach Anspruch 10, **dadurch gekennzeichnet, dass** bei einer Montage des Schwerlastankers mit vertikal ausgerichteter Längserstreckung das Bauteil (12) derart um die Ankerstange herumgeführt und in das Hüllrohr (1) eingelegt wird, dass eine Rinne im Bauteil (12) mit ihrem Boden in Schwerkraftrichtung unterhalb der Ankerstange (4) liegt und eine axiale Schlitzung oben liegt.

12. Verfahren nach Anspruch 10, **dadurch gekennzeichnet, dass** das Bauteil als einfache Scheibe mit einer mittigen Ausnehmung über das obere Ende der Ankerstange herübergeführt und sodann in das obere offene Ende des Hüllrohres eingeführt wird.

13. Verfahren nach Anspruch 10, **dadurch gekennzeichnet, dass** bei einer zweiteiligen Ausbildung des Bauteils (12) als flächiges, scheibenförmiges Element die beiden Hälften des Bauteils (12) von zwei Seiten um die Ankerstange (4) herumgelegt werden und eine geschlossenen die Ankerstange (4) umgebende Scheibe ausbilden und sodann durch axiales Verschieben auf der Ankerstange (4) in das Hüllrohr (1) eingeschoben werden und hierdurch die Ankerstange auf die Hüllrohrmittenachse zentriert.

14. Verfahren nach einem der vorherigen Ansprüche 10 bis 13, **dadurch gekennzeichnet, dass** beim gleichzeitigen Setzen von mehreren Schwerlastankern die Bodenplatten (8) zueinander mittels einer Lehre ausgerichtet und befestigt werden.

15. Verfahren nach einem der vorherigen Ansprüche 10 bis 14, **dadurch gekennzeichnet, dass** um das obere Ende des Hüllrohres (1), an welchem eine axial verschiebliche obere Ankerplatte (2) befestigbar ist, eine Verschalung angeordnet wird, mittels der bei Umgießen eines Hüllrohres (1) eine Aussparung um das obere Ende des Hüllrohres (1) in der verfestigten Vergussmasse erzeugt wird, innerhalb der die obere Ankerplatte (2) durch axiales Verschieben auf dem Hüllrohr (1) justiert wird, wobei nach Justage die obere Ankerplatte (2) in der Aussparung mit einer Vergussmasse umgossen wird.

## Claims

1. Heavy load anchor comprising a cladding tube (1) with a lower (3) and an upper anchor plate (2) and with an anchor rod (4) which is accommodated or can at least be accommodated therein and which is fastened or can at least be fastened to the lower anchor plate (3) or engages behind the lower anchor plate (3) through a cutout (3a), wherein an adapter (7) is fastened to the lower anchor plate (3) below the latter and has arranged on its lower end a baseplate (8) which can be removed from the end and can be connected to the end in a fitting manner, **characterized in that** it comprises at least one separate component (12) which can be introduced into the cladding tube (1) through the upper open end of the cladding tube (1) and can be placed around the anchor rod (4) at least in certain regions, wherein the at least one component (12) can be used to fix the anchor rod (4) centrally with respect to the cladding tube centre axis (1a) in the cladding tube (1).

2. Heavy load anchor according to Claim 1, **characterized in that** the component (12) is designed as
a. a tubular sleeve with an outside diameter which corresponds to the inside diameter of the cladding tube (1) and with a cutout (12a) which corresponds in its shape to a central bore in the diameter of the anchor rod (4) and which is open on one side in the direction of the lateral surface, or
b. a solid cylinder which has a slot arrangement along its longitudinal extent, wherein this slot arrangement forms a groove with a semicircular groove piece whose circle centre point corresponds with the desired position of the anchor rod, in particular the centre axis of the cladding tube (1), or
c. a sleeve-shaped or flat element with an outside diameter which corresponds to the inside diameter of the cladding tube (1) and with an inner central cutout in the diameter of the anchor rod (4), or
d. a sleeve-shaped or flat element with an outside diameter which corresponds to the inside diameter of the cladding tube (1) and with an inner central cutout in the diameter of the anchor rod (4) which element is divided into two in a section plane comprising the centre axis.

3. Heavy load anchor according to either of the preceding claims, **characterized in that** the inner lateral surface of the upper end of the cladding tube (1) has a conical run-on region.

4. Heavy load anchor according to one of the preceding claims, **characterized in that** the adapter (7) is designed as a cylindrical element, in particular as a tube (7), which is coaxial to cladding tube (1), and the fit is formed between a projection (8a) which is arranged on the baseplate (8) and which encloses the cylindrical element (7) or engages therein.

5. Heavy load anchor according to one of the preceding claims, **characterized in that** at least one lug is fastened to the lower anchor plate (3) and/or to the cladding tube (1), in particular for fastening auxiliary connectors by means of which a plurality of heavy load anchors can be connected to one another.

6. Heavy load anchor according to one of the preceding claims, **characterized in that** a stop element (11) which limits the insertion depth of the anchor rod (4), which element is designed in particular as a plate (11), with a projection (11a), in particular a central projection, which is directed towards the lower anchor plate (3), is arranged in a region between the baseplate (8) and the lower anchor plate (3) in an adapter (7) designed at least partially as a tube.

7. Heavy load anchor according to one of the preceding claims, **characterized in that** two mutually opposite guide plates (10) are arranged above the lower anchor plate (3) in the cladding tube (1), the spacing of these guide plates from one another decreasing in the direction of the lower anchor plate (3), in particular decreasing to a degree which at least substantially corresponds to the width of a cutout (3a) in the anchor plate (3) through which the lower, in particular hammer head-shaped, end (4a) of the anchor rod (4) can be guided.

8. Heavy load anchor according to one of the preceding claims, **characterized in that** the upper anchor plate (2) is axially displaceable at least in certain regions on the upper end of the cladding tube (1), in particular in a fit formed between the cladding tube (1) and anchor plate (2).

9. Heavy load anchor according to Claim 8, **characterized in that** the upper anchor plate (2) has at least one adjusting screw, in particular three adjusting screws with a uniform angular pitch for adjusting the axial position, wherein the at least one adjusting screw is oriented parallel to the centre axis (1a) of the cladding tube (1).

10. Method for setting at least one heavy load anchor according to one of the preceding claims, **characterized in that** the baseplate (8) is removed from an adapter (7) of the heavy load anchor to be set and fastened separately from the remainder of the heavy load anchor to a formwork surface, in particular by adhesive bonding in thin-bed mortar, and after fastening the baseplate (8) the remainder of the heavy load anchor is connected by means of the adapter (7) to the baseplate (8) and at least one separate component (12) is introduced into the cladding tube (1) through the upper open end of the cladding tube (1) and is placed around the anchor rod (4) at least in certain regions, wherein the at least one component (12) is used to fix the anchor rod (4) centrally with respect to the cladding tube centre axis (1a) in the cladding tube (1).

11. Method according to Claim 10, **characterized in that**, when mounting the heavy load anchor with a vertically oriented longitudinal extent, the component (12) is guided around the anchor rod and inserted into the cladding tube (1) in such a way that a groove in the component (12) is situated with its base in the direction of gravity below the anchor rod (4) and an axial slot arrangement is situated at the top.

12. Method according to Claim 10, **characterized in that** the component, as a single disc with a central cutout, is guided over the upper end of the anchor rod and then introduced into the upper open end of the cladding tube.

13. Method according to Claim 10, **characterized in that**, with a two-part design of the component (12) as a flat, disc-shaped element, the two halves of the component (12) are placed around the anchor rod (4) from two sides and form a closed disc surrounding the anchor rod (4) and are then inserted into the cladding tube (1) by axial displacement on the anchor rod (4) and as a result the anchor rod is centred onto the cladding tube centre axis.

14. Method according to one of the preceding Claims 10 to 13, **characterized in that**, when setting a plurality of heavy load anchors simultaneously, the baseplates (8) are oriented with respect to one another by means of a gauge and fastened.

15. Method according to one of the preceding Claims 10 to 14, **characterized in that** a formwork is arranged around the upper end of the cladding tube (1) to which an axially displaceable upper anchor plate (2) can be fastened, by means of which formwork, during encapsulation of a cladding tube (1), a clearance is produced around the upper end of the cladding tube (1) in the solidified casting compound, inside which the upper anchor plate (2) is adjusted by axial displacement on the cladding tube (1), wherein, after adjustment, the upper anchor plate (2) is encapsulated with a casting compound in the clearance.

## Revendications

1. Ancrage pour charges lourdes comprenant une gaine (1) avec une plaque d'ancrage inférieure (3) et supérieure (2) et avec une tige d'ancrage (4) contenue ou pouvant être contenue dans celle-ci, qui est ou qui peut au moins être fixée à la plaque d'ancrage inférieure (3) ou qui s'accroche par l'arrière à la plaque d'ancrage inférieure (3) à travers une découpe (3a), dans lequel une pièce d'ajustage (7) est fixée à la plaque d'ancrage inférieure (3) en dessous de celle-ci, à l'extrémité inférieure de laquelle est disposée une plaque de fond (8) pouvant être enlevée de l'extrémité et pouvant être assemblée à l'extrémité de manière ajustée, **caractérisé en ce qu'**il comprend au moins un composant séparé (12), qui peut être introduit dans la gaine (1) à travers l'extrémité supérieure ouverte de la gaine (1) et qui peut se placer au moins localement autour de la tige d'ancrage (4), dans lequel la tige d'ancrage (4) peut être immobilisée dans la gaine (1) en position centrée par rapport à l'axe central de la gaine (1a) avec ledit au moins un composant (12).

2. Ancrage pour charges lourdes selon la revendication 1, **caractérisé en ce que** le composant (12) est réalisé en forme de
a. Douille tubulaire avec un diamètre extérieur, qui correspond au diamètre intérieur de la gaine (1) et avec une découpe (12a), qui correspond par sa forme à un alésage central dans le diamètre de la tige d'ancrage (4), qui est ouvert d'un côté en direction de la surface latérale, ou
b. Cylindre plein, qui présente une entaille le long de son extension longitudinale, dans lequel cette entaille forme une rainure avec un fond de rainure semi-circulaire, dont le centre du cercle coïncide avec la position désirée de la tige d'ancrage, en particulier l'axe central de la gaine (1), ou
c. Elément en forme de douille ou plat avec un diamètre extérieur, qui correspond au diamètre intérieur de la gaine (1) et avec une découpe centrale intérieure dans le diamètre de la tige d'ancrage (4), ou
d. Elément en forme de douille ou plat avec un diamètre extérieur, qui correspond au diamètre intérieur de la gaine (1) et avec une découpe centrale intérieure dans le diamètre de la tige d'ancrage (4), qui est divisé en deux dans un plan de coupe contenant l'axe central.

3. Ancrage pour charges lourdes selon l'une quelconque des revendications précédentes, **caractérisé en ce que** la surface latérale intérieure de l'extrémité supérieure de la gaine (1) présente une zone d'entrée conique.

4. Ancrage pour charges lourdes selon l'une quelconque des revendications précédentes, **caractérisé en ce que** la pièce d'ajustage (7) est réalisée sous la forme d'un élément cylindrique coaxial à la gaine (1), en particulier en forme de tube (7), et l'ajustement est formé entre une saillie (8a) disposée sur la plaque de fond (8), qui entoure l'élément cylindrique (7) ou qui s'engage dans celui-ci.

5. Ancrage pour charges lourdes selon l'une quelconque des revendications précédentes, **caractérisé en ce qu'**au moins une patte est fixée à la plaque d'ancrage inférieure (3) et/ou à la gaine (1), en particulier pour la fixation de liens auxiliaires, avec lesquels plusieurs ancrages pour charges lourdes peuvent être reliés entre eux.

6. Ancrage pour charges lourdes selon l'une quelconque des revendications précédentes, **caractérisé en ce qu'**un élément de butée (11) limitant le profondeur de pénétration de la tige d'ancrage (4) dans une région comprise entre la plaque de fond (8) et la plaque d'ancrage inférieure (3) dans une pièce d'ajustage (7) réalisée au moins partiellement en forme de tube, qui est réalisé en particulier sous forme de plaque (11) avec une saillie centrale (11a) orientée vers la plaque d'ancrage inférieure (3).

7. Ancrage pour charges lourdes selon l'une quelconque des revendications précédentes, **caractérisé en ce que** deux déflecteurs (10) opposés l'un à l'autre sont disposés au-dessus de la plaque d'ancrage inférieure (3) dans la gaine (1), dont l'espacement l'un de l'autre diminue en direction de la plaque d'ancrage inférieure (3), et diminue en particulier jusqu'à une dimension qui correspond au moins essentiellement à la largeur d'une découpe (3a) dans la plaque d'ancrage (3), à travers laquelle l'extrémité inférieure (4a), en particulier en forme de tête de marteau, de la tige d'ancrage (4) peut être introduite.

8. Ancrage pour charges lourdes selon l'une quelconque des revendications précédentes, **caractérisé en ce que** la plaque d'ancrage supérieure (2) est déplaçable axialement au moins localement à l'extrémité supérieure de la gaine (1), en particulier dans un ajustement réalisé entre la gaine (1) et la plaque d'ancrage (2).

9. Ancrage pour charges lourdes selon la revendication 8, **caractérisé en ce que** la plaque d'ancrage supérieure (2) présente au moins une vis d'alignement, en particulier trois vis d'alignement à distance angulaire uniforme, pour l'ajustement de la position axiale, dans lequel ladite au moins une vis d'alignement est orientée parallèlement à l'axe central (1a) de la gaine (1).

10. Procédé de mise en place d'au moins un ancrage pour charges lourdes selon l'une quelconque des revendications précédentes, **caractérisé en ce que** la plaque de fond (8) est enlevée d'une pièce d'ajustage (7) de l'ancrage pour charges lourdes à mettre en place et fixée séparément du reste de l'ancrage pour charges lourdes à une surface de coffrage, en particulier par collage en mince lit de mortier et après la fixation de la plaque de fond (8), le reste de l'ancrage pour charges lourdes est assemblé au moyen d'une pièce d'ajustage (7) à la plaque de fond (8) et au moins un composant séparé (12) est introduit dans la gaine (1) à travers l'extrémité supérieure ouverte de la gaine (1) et est placé au moins localement autour de la tige d'ancrage (4), dans lequel la tige d'ancrage (4) est immobilisée dans la gaine (1) en position centrée par rapport à l'axe central de la gaine (1a) avec ledit au moins un composant séparé (12).

11. Procédé selon la revendication 10, **caractérisé en ce que**, lors d'un montage de l'ancrage pour charges lourdes avec une extension longitudinale orientée verticalement, le composant (12) est mené autour de la tige d'ancrage et introduit dans la gaine (1) de telle manière qu'une rainure dans le composant (12) se trouve avec son fond dans la direction de la pesanteur en dessous de la tige d'ancrage (4) et qu'une entaille axiale se trouve au-dessus.

12. Procédé selon la revendication 10, **caractérisé en ce que** le composant en tant que rondelle simple avec une découpe centrale est engagé par-dessus l'extrémité supérieure de la tige d'ancrage et est ensuite introduit dans l'extrémité supérieure ouverte de la gaine.

13. Procédé selon la revendication 10, **caractérisé en ce que**, dans le cas d'une réalisation en deux pièces du composant (12) en tant qu'élément plat en forme de rondelle, les deux moitiés du composant (12) sont posées par les deux côtés autour de la tige d'ancrage (4) et forment une rondelle fermée entourant la tige d'ancrage (4) et elles sont ensuite insérées dans la gaine (1) par déplacement axial sur la tige d'ancrage (4) et la tige d'ancrage se centre ainsi sur l'axe central de la gaine.

14. Procédé selon l'une quelconque des revendications précédentes 10 à 13, **caractérisé en ce que**, lors de la mise en place simultanée de plusieurs ancrages pour charges lourdes, les plaques de fond (8) sont orientées l'une par rapport à l'autre et fixées au moyen d'un gabarit.

15. Procédé selon l'une quelconque des revendications précédentes 10 à 14, **caractérisé en ce qu'**un coffrage est disposé autour de l'extrémité supérieure de la gaine (1), à laquelle une plaque d'ancrage supérieure mobile axialement (2) peut être fixée, au moyen duquel, lors de la coulée d'une gaine (1), on produit une découpe autour de l'extrémité supérieure de la gaine (1) dans la masse d'enrobage solidifiée, à l'intérieur de laquelle la plaque d'ancrage supérieure (2) est alignée sur la gaine (1) par déplacement axial, dans lequel la plaque d'ancrage supérieure (2) est après alignement surmoulée dans la découpe avec une masse d'enrobage.
